# EUROPÄISCHE PATENTANMELDUNG

(11) **EP 1 707 044 A1**
(43) Veröffentlichungstag der Anmeldung: **04.10.2006**
(21) Anmeldenummer: 06111832.9
(22) Anmeldetag: 28.03.2006
(51) Int. Cl.: A01F 15/07

(54) **Ladevorrichtung**

(30) Priorität: 02.04.2005 DE 102005015223
(71) Anmelder: Deere & Company, Moline, IL 61265-8098 (US)
(72) Erfinder: Chapon, Emmanuel, 70100, Velet (FR); Viaud, Jean, 70100, Gray (FR); Chapron, Fabien, 51600, Suippes (FR)
(74) Vertreter: Magin, Ludwig Bernhard

(57) **Zusammenfassung**

Es wird eine Ladevorrichtung (34) für die Hüllmittelrolle (32) einer Umhüllungsvorrichtung (18) vorgeschlagen, bei der die Hüllmittelrolle (32) auf einen Träger (38) aufgelegt und in einen Betriebszustand bewegt werden kann, wo sie mittels einer Rolle (76) in Position gehalten wird. Die Rolle (76) wird von einer Betätigungsvorrichtung (50) in eine Betriebsstellung gebracht, sobald der Träger (38) aus seiner Ladestellung bewegt wird.

## Beschreibung

Die Erfindung betrifft eine Ladevorrichtung einer Umhüllungsvorrichtung, insbesondere einer Rundballenpresse, für eine Hüllmittelrolle.

Im Stand der Technik sind verschiedene Vorrichtungen bekannt, mit denen eine Hüllmittelrolle in die Umhüllungsvorrichtung z.B. einer Rundballenpresse eingesetzt werden kann. So zeigt z.B. die EP 1 099 366 eine Ladevorrichtung, bei der eine Hüllmittelrolle auf einen Träger aufgelegt und mit diesem in eine Betriebsstellung gebracht werden kann.

Das der Erfindung zugrunde liegende Problem wird darin gesehen, dass es nach dem Einlegen der Hüllmittelrolle noch weiterer Handgriffe bedarf, bis die Umhüllungsvorrichtung betriebsbereit ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Dadurch, dass die Ladevorrichtung einen Träger zur Aufnahme der Hüllmittelrolle, der zwischen einer Ladestellung und einer Betriebsstellung bewegbar ist, eine Betätigungsvorrichtung, die geeignet ist, die Umhüllungsvorrichtung in einen Zustand zu versetzen, in dem Hüllmittel von der Hüllmittelrolle während eines Hüllbetriebs abgenommen werden kann, und Mittel enthält, die die Betätigungsvorrichtung abhängig von der Stellung des Trägers aktivieren, wird sie z.B. mit einem Handgriff, nämlich durch die Bewegung des Trägers betriebsbereit gemacht. Dieser Vorteil vereinfacht die Bedienung, stellt sicher, dass bei hochgeklapptem Träger die Ladevorrichtung betriebsbereit ist und spart Zeit. Die Stellung des Trägers kann sowohl mechanisch als auch elektrisch oder hydraulisch auf die Betätigungsvorrichtung übertragen werden, unter anderem durch Schalter oder mechanische Folgeglieder.

Während einfach und gut zugängliche Träger mechanisch, also per Hand zwischen ihren Stellungen geschwenkt werden können, ist es insbesondere bei Trägern mit hohem Gewicht und/oder schlechter Zugänglichkeit von Vorteil, wenn dessen Verstellung motorisch durchgeführt werden kann.

Wenn die Betätigungsvorrichtung als eine Feder, insbesondere als eine Gasdruckfeder, ausgebildet ist, kann diese von einer Bedienungsperson oder auch mittels einer von der Maschine, an der sich die Ladevorrichtung befindet, abgeleiteten Bewegung gespannt und bei Bedarf entspannt werden. Andererseits kann die Betätigungsvorrichtung auch als ein Motor ausgebildet sein, der in einer oder zwei Richtungen aktivierbar ist. Die Betätigungsvorrichtung ist bevorzugt so ausgebildet und angeordnet, dass sie infolge einer von einer Bedienungsperson auf den Träger ausgeübten Zugbewegung gespannt wird, so dass die Bedienungsperson körperlich geschont bleibt.

Das Vorsehen einer Wandung zur Positionierung der Hüllmittelrolle im Betrieb stellt sicher, dass diese aufgrund des eigenen Schwungs beim Laden nicht an der betriebsmäßigen Position vorbei rollt und dann mit Mühe wieder richtig positioniert werden muß. Eine solche Wandung kann den Bereich des Hüllmittellaufs auch gegen das Ansammeln von Erntegut schützen und damit die Zuverlässigkeit der Umhüllungsvorrichtung insgesamt hoch halten.

Um eine Umhüllungsvorrichtung in einen Betriebszustand zu versetzen, werden in sinnvoller Weise Rollen vorgesehen, die die Position der Hüllmittelrolle sichern und die z.B. mittels eines oder mehrerer Arme oder Andrückarme gegenüber der Hüllmittelrolle bewegbar sind. Dabei kann/können die eine oder die mehreren Rollen bremsbar oder antreibbar oder frei drehend ausgebildet sein, und bei dem Arm handelt es sich einfacherweise um ein Gestänge, einen Lenker, ein Seil oder dergleichen, die in Lagern aufgenommen sind. Dessen ungeachtet, können aber auch elektrisch oder hydraulisch verstellbare Rollen vorgesehen werden. Die Betätigungsvorrichtung sorgt für oder unterstützt zumindest die Bewegung der Rolle.

Die Verwendung einer Verbindung mittels eines Schlitzes und eines darin geführten Bolzens, Stifts, einer Schraube, Achse oder dergleichen, macht es möglich, die Bewegung des Träger erst ab einem bestimmten Weg für die Steuerung der Betätigungsvorrichtung wirksam werden zu lassen. Solange der Andrückarm trotz einer Bewegung des Trägers in einer Außerbetriebsstellung gehalten werden kann, ist es möglich, eine Hüllmittelrolle einzulegen oder zu entfernen.

Da aufgrund einer Schwenkbewegung um eine Achse aufgebaute Momente umso größer sind, je größer die Hebelarme sind, ist die Verwendung eines Mitnehmers sinnvoll, wenn dieser von der Bewegung des Andrückarms teilweise unabhängig ist und aufgrund seiner freien Bewegung schneller einen größeren Hebelarm bilden kann als dies mit dem direkten Anschluß der Betätigungsvorrichtung an dem Andrückarm möglich wäre. Die lose Verbindung über einen Mitnehmer macht es auch möglich, dass der Andrückarm oder der Mitnehmer sich auch dann noch bewegen können, wenn der jeweils andere sich nicht mehr bewegen kann.

Die Aufnahme der Betätigungsvorrichtung auf einem Lager, dessen Lage von dem Träger beeinflussbar ist, erlaubt es, die Wirkung der Betätigungsvorrichtung während und aufgrund der Bewegung des Trägers zu ändern und somit auch an die jeweiligen Erfordernisse anzupassen.

Insbesondere dann, wenn auf den Träger äußere Kräfte wirken, ist es von Vorteil, wenn er z.B. zur Sicherheit einer Bedienungsperson in wenigstens einer Endstellung gesichert werden kann. Ein hierzu vorgesehener Riegel kann mechanisch ausgebildet und/oder in einer oder beiden Richtung/en vorgespannt oder mittels Fremdkraft bewegbar sein. Damit der gegebenenfalls vorhandene Riegel gemeinsam mit dem Träger von einer Bedienungsperson bewegt werden kann, ist eine Riegelbetätigungsvorrichtung sinnvoll, die sich dort befindet, wo eine Bedienungsperson auch den Träger erfassen würde.

In der Zeichnung ist ein nachfolgend näher beschriebenes Ausführungsbeispiel der Erfindung dargestellt. Es zeigt:
- Fig. 1: eine Rundballenpresse mit einer Umhüllungsvorrichtung,
- Fig. 2: die Umhüllungsvorrichtung in einem Ladezustand,
- Fig. 3: die Umhüllungsvorrichtung mit einer Hüllmittelrolle in einem geladenen Zustand,
- Fig. 4: die Umhüllungsvorrichtung mit der Hüllmittelrolle in betriebsmäßigem Zustand, und
- Fig. 5: die Umhüllungsvorrichtung im Betriebszustand mit einer nahezu aufgebrauchten Hüllmittelrolle.

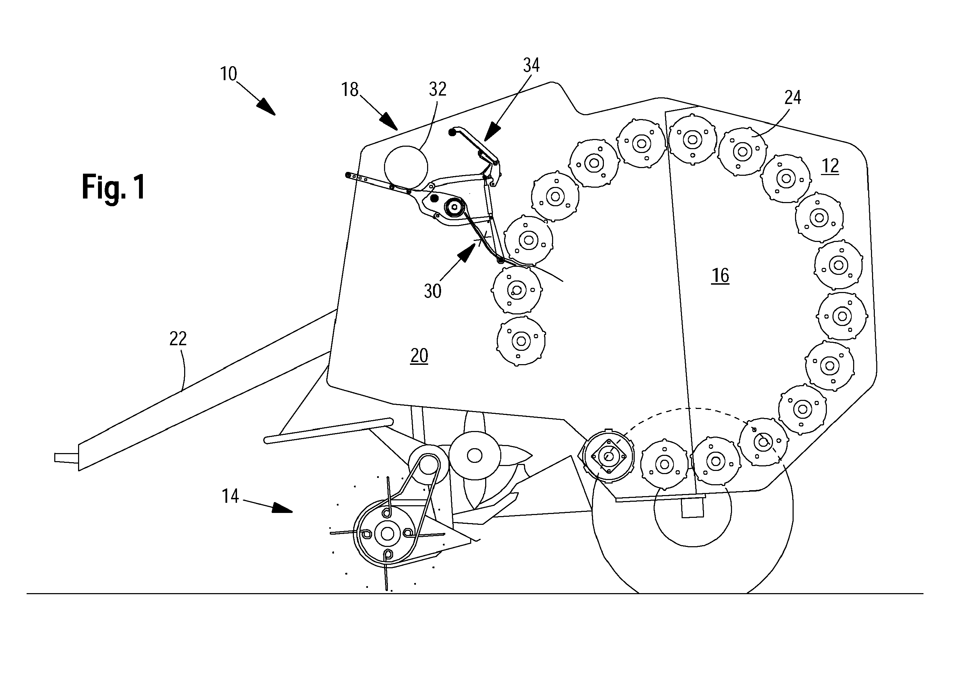

Eine in Figur 1 gezeigte Rundballenpresse 10 weist ein Fahrgestell 12, eine Erntegutzufuhrvorrichtung 14, eine Presskammer 16 und eine Umhüllungsvorrichtung 18 auf.

Die Rundballenpresse 10 steht hier stellvertretend für eine Presse, die ein Presserzeugnis liefert, das mit Hüllmittel umhüllt werden kann. Folglich kann es sich um eine landwirtschaftlich oder industriell einsetzbare Presse handeln, mit der Erntegut, Müll, Papier, Stoff, Baumwolle, Tabak, etc. insbesondere zu rundzylindrischen Ballen geformt werden kann. Die dargestellte Bauweise einer Festkammerpresse ist ebenfalls nur beispielhaft und kann durch eine Rundballenpresse 10 mit einer in der Größe variablen Presskammer 16 oder mit einer gemischten Bauweise ausgebildet sein. Grundsätzlich könnte die Umhüllungsvorrichtung 18 überall dort eingesetzt werden, wo es gilt, einen Gegenstand mit einem von einer Rolle abzuziehenden Hüllmittel zu bedecken, d.h. auch unabhängig von dem Vorhandensein einer Presse.

Das Fahrgestell 12 weist in nicht näher bezeichneter Weise einen Rahmen und eine Achse mit Rädern auf, an den Seitenwände 20 und eine Deichsel 22 angebracht sind, wie dies herkömmlich vorgenommen wird. Die Deichsel 22 erstreckt sich annähernd horizontal von dem vorderen Endbereich des Fahrgestells 12 zu einem nicht gezeigten Zugfahrzeug.

Die Erntegutzufuhrvorrichtung 14 steht stellvertretend für jegliche Vorrichtung, mit der zu pressendes Gut in die Presskammer 16 gespeist wird. Die Erntegutzufuhrvorrichtung 14 befindet sich unterhalb der Deichsel 22.

Die Presskammer 16 erstreckt sich zwischen den beiden Seitenwänden 20 und wird in diesem Fall von einer Vielzahl auf einem Kreis gelegener Walzen 24 umgeben, die allerdings im vorderen Bereich einen oberen Spalt für die Umhüllungsvorrichtung 18 und einen unteren Spalt für die Erntegutzufuhrvorrichtung 14 belassen.

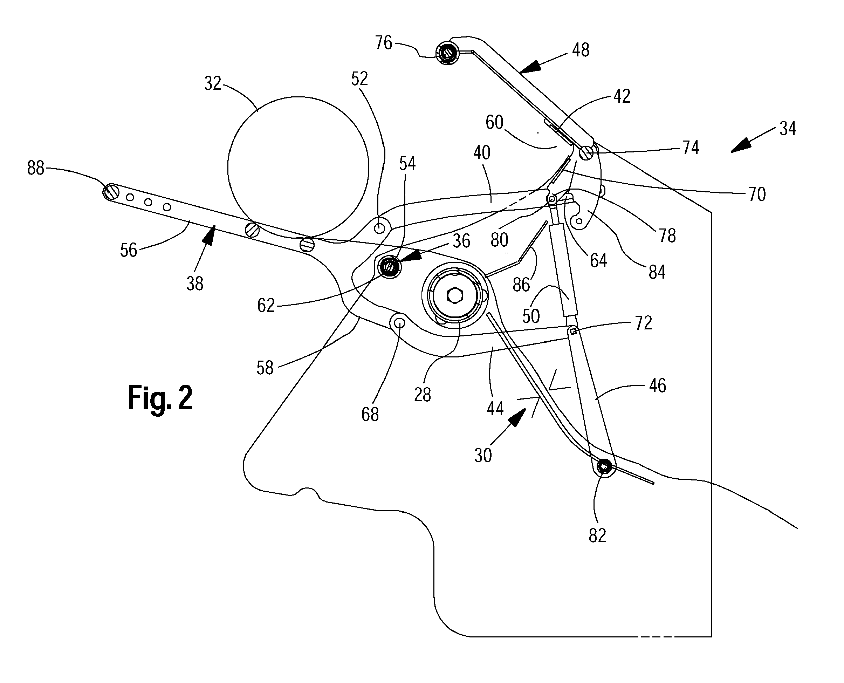

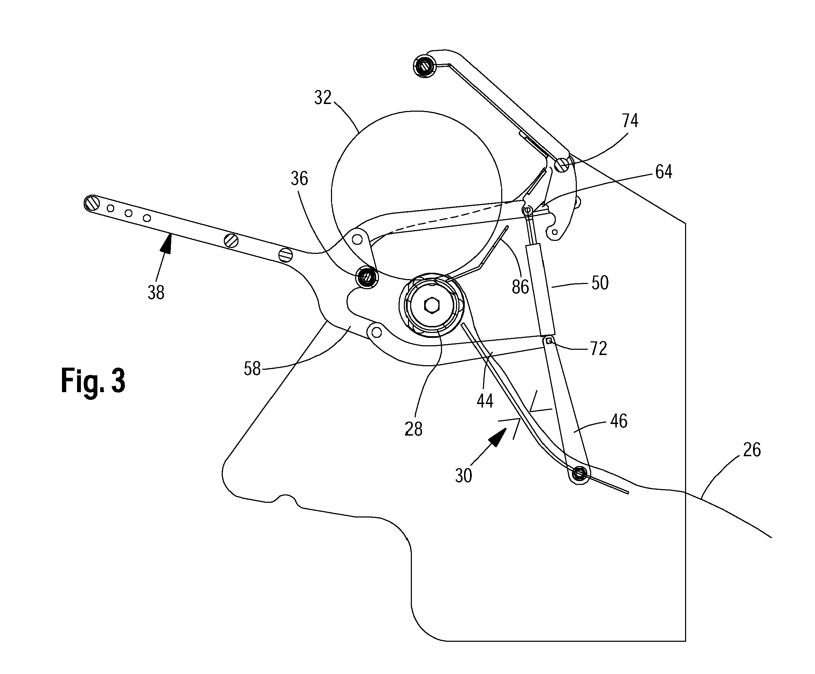

Die Umhüllungsvorrichtung 18 wird benutzt, um in die Presskammer 16 Hüllmittel 26 in der Form von Folie, Netz, Papier oder dergleichen einzuführen und um ein Presserzeugnis zu wickeln. Derartige Umhüllungsvorrichtungen 18 sind ihrer Art nach bekannt und können an fast beliebigen Stellen der Rundballenpresse 10 angeordnet werden; vorteilhafterweise ist ihre Unterbringung so gewählt, dass eine Bedienungsperson leicht Zugang zu ihr hat. In dem vorliegenden Fall befindet sich die Umhüllungsvorrichtung 18 im vorderen Bereich des Fahrgestells 12 oberhalb der Deichsel 22 und ist so ausgebildet, dass sie das Hüllmittel 26 durch einen Spalt - den oberen - zwischen zwei Walzen 24 in die Presskammer 16 abgibt. Im Bereich des Spalts befindet sich eine Rolle 28 zur Zufuhr von Hüllmittel 26 und eine Trennvorrichtung 30, um dieses zu trennen, wie dies hinlänglich bekannt ist. Das Hüllmittel 26 ist auf einer Hüllmittelrolle 32 aufgewickelt. Der Umhüllungsvorrichtung 18 ist auch eine Ladevorrichtung 34 zugeordnet, zu deren Beschreibung auf die Figuren 2 bis 5 verwiesen wird.

Figur 2 zeigt die Umhüllungsvorrichtung 18 und deren Ladevorrichtung 34 in einem Ladezustand, wobei in der Darstellung insbesondere folgende Komponenten zu erkennen sind: ein Lager 36, ein Träger 38, ein Arm 40, ein Mitnehmer 42, ein erster Lenker 44, ein zweiter Lenker 46, ein Andrückarm 48, eine Betätigungsvorrichtung 50 und eine Stützrolle 54.

Die Ladevorrichtung 34 ist so geschaffen und angeordnet, dass eine Hüllmittelrolle 32 relativ bequem von einer Bedienungsperson auf den Träger 38 aufgelegt und in eine Betriebsstellung gebracht werden kann.

Das Lager 36 wird von einer/einem durchgehenden Welle, Zapfen oder dergleichen gebildet, die eine sich quer zur Fahrtrichtung erstreckende, waagrechte Schwenk- oder Drehachse definiert/definieren, die parallel zu, vor und ungefähr auf der Höhe der Drehachse der Rolle 28 verläuft. Das Lager 36 ist in den Seitenwänden 20 oder in dem Fahrgestell 12 gehalten.

Der Träger 38 kann aus Stahl oder Kunststoff hergestellt sein und ist ausreichend stark, um die Hüllmittelrolle 32 tragen zu können; üblicherweise ist er als ein Schweißzusammenbau gebildet, der sich im Wesentlichen zwischen den beiden Seitenwänden 20 oder zwischen deren gedachter Verlängerung erstreckt und um das Lager 36 vertikal schwenkbar ist. Der Träger 38 untergliedert sich in einen langen Tragschenkel 56 und einen kurzen Anschluss-Schenkel 58, die zusammen einstückig ausgebildet sind.

In der Ladestellung ist der Tragschenkel 56 zu dem Anschluss-Schenkel 58 hin geneigt, so dass eine aufgelegte Hüllmittelrolle 32 nicht unbeabsichtigt herabrollen kann. In dem dem Anschluss-Schenkel 58 zugelegenen Endbereich des Tragschenkels 56 ist oberhalb der Tragebene ein Lager 52 in einem Anschlussauge vorgesehen. In der Tragebene des Trägers 38 und an dessen dem Lager 36 zugelegenen Endbereich ist ein Lager 62 vorgesehen, das von dem Lager 36 aufgenommen wird und eine vertikal Schwenkbewegung des Trägers 38 erlaubt. Der Anschluss-Schenkel 58 erstreckt sich im Wesentlichen parallel zu dem Tragschenkel 56 und ist in einem Bogenstück an diesen angeschlossen; in seinem freien Endbereich ist ein Lager 68 vorgesehen. Nach alledem befinden sich an dem dem Lager 36 zugelegenen Endbereich des Trägers 38 drei Lager 52, 62 und 68, die auf oder im Wesentlichen auf einer Linie gelegen sind.

Der Arm 40 ist im Wesentlichen gerade ausgebildet und erstreckt sich unabhängig von seinem Betriebszustand im Wesentlichen horizontal. An einem in Figur 2 linken Endbereich ist der Arm 40 in dem Lager 52 mit dem Tragschenkel 56 verbunden, während er in einem rechten Endbereich einen Schlitz 64 entlang seiner Längsachse enthält.

Der Mitnehmer 42 ist als ein zweischenkliges Winkelstück ausgebildet, das auf einem Lager 74 vertikal schwenkbar aufgenommen ist. An der Unterseite eines oberen Schenkels ist eine Mitnehmerplatte bzw. ein Anschlag 60 und an der Vorderseite eines unteren Schenkels ist eine Mitnehmerplatte bzw. ein Anschlag 70 vorgesehen, die aus einer einfachen Abkantung an dem Mitnehmer 42 gebildet sind. Die Anschläge 60, 70 könnten natürlich auch angeschweißt oder sonstwie angeschlossen sein und sind so ausgerichtet, dass sie sich an den Andrückarm 48 anlegen und diesen bewegen können; sie verlaufen unter einem Winkel von ca. 90 Grad zueinander. In dem freien Endbereich des unteren Schenkels ist ein Lager 78 zum Anschluß des oberen Endbereichs der Betätigungsvorrichtung 50 vorgesehen, z.B. mittels einer Schraube, eines Stifts, oder dergleichen. Vorzugsweise ist auf jeder Seite der Umhüllungsvorrichtung 18 ein derartiger Mitnehmer 42 vorgesehen.

Der erste Lenker 44 ist als ein leicht gekrümmtes Flacheisen ausgebildet, das einenends an dem Lager 68 des Anschluss-Schenkels 58 und anderenends in einem Lager 72 in einem Endbereich des zweiten Lenkers 46 gelenkig angreift. Auch hier ist ein Lenker 44 auf jeder Seite vorgesehen.

Der zweite Lenker 46 ist einenends in dem Lager 72 mit dem ersten Lenker 44 verbunden und anderenends ist er auf einem Lager 82 vertikal schwenkbar gelagert, wobei das jeweilige Lager 82 in einer Seitenwand 20 oder dem Fahrgestell 12 im Wesentlichen unterhalb des Lagers 74 und in Figur 2 beträchtlich rechts des Lagers 68 vorgesehen ist. Die Anordnung der Lager 68, 72, 82 und die Länge der Lenker 44, 46 ist so getroffen, dass sich zwischen den beiden Lenkern 44, 46 im Wesentlichen ein Winkel zwischen 90 und 135 Grad - je nach dem Betriebszustand - ergibt.

Der Andrückarm 48 ist geringfügig kürzer ausgebildet als der Arm 40 und an seinem dem Lager 74 abgelegenen Endbereich mit einer Achse verbunden, auf der eine Rolle 76 vorzugsweise drehbar gelagert ist. Die Rolle 76 verläuft parallel zu der Rolle 28 und ist so angeordnet, dass sie auf die Umfangsfläche der Hüllmittelrolle 32 aufgesetzt werden kann. An dem der Rolle 76 abgelegenen Endbereich des Andrückarms 48 ist ein Winkelhebel 84 vorgesehen, der nahezu rechtwinklig zu der Haupterstreckungsrichtung des Andrückarms 48 verläuft und mit diesem im Bereich des Lagers 74 zusammentrifft.

Die Betätigungsvorrichtung 50 ist in diesem Ausführungsbeispiel als eine Gasdruckfeder ausgebildet; alternativ könnte auch eine mechanische Feder, z.B. eine Schraubendruckfeder vorgesehen sein, oder gar ein Motor, z.B. ein Hydraulik- oder Elektromotor. Die Betätigungsvorrichtung 50 ist mit einem oberen Endbereich in dem Lager 78 an den Mitnehmer 42 angeschlossen, wozu ein Bolzen 80 vorgesehen ist, der sowohl die Lagerachse bildet, als sich auch durch den Schlitz 64 erstreckt und in diesem geführt ist. Mit seinem unteren Endbereich ist die Betätigungsvorrichtung 50 in dem Lager 72 gehalten. Die Betätigungsvorrichtung 50 erstreckt sich in jedem Betriebszustand nahezu senkrecht und ist stets bestrebt, sich zu verlängern, d.h. auszufahren. Zwar ändert sich während des Betriebs die Lage sowohl des oberen als auch des unteren Anschlusspunktes; dennoch beschreibt der obere Endbereich der Betätigungsvorrichtung 50 im Wesentlichen eine teilweise Kreisbewegung um das Lager 74. Während dieser teilweise kreisförmigen Bewegung wird - da sich die Lage des unteren Endbereichs kaum ändert - die Betätigungsvorrichtung 50 dann auf ihre minimal Länge zusammen gedrückt, wenn die Lager 64, 72 und 74 auf einer Linie zu liegen kommen. In dieser zuvor beschriebenen Stellung wird die Betätigungsvorrichtung 50 wirkungslos, auf jeder seitlich davon gelegenen Stellung fährt die Betätigungsvorrichtung 50 aus und schwenkt den Mitnehmer 42 um das Lager 74.

Die Stützrolle 54 ist in der Art eines Rohrs aus Stahl oder Kunststoff gebildet und verläuft koaxial zu der Achse des Lagers 36. Die Stützrolle 54 ist drehbar auf dem Lager 36 gehalten und geeignet, gemeinsam mit der Rolle 28 die Hüllmittelrolle 32 zu stützen. Die Stützrolle 54 kann angetrieben, gebremst oder frei drehend ausgebildet sein.

Schließlich ist eine Wandung 86 vorgesehen, die aus einem abgewinkelten Blech besteht, das vorzugsweise starr zwischen den beiden Seitenwänden 20 gehalten wird. Vorne und unten reicht die Wandung 86 bis nahe an die Rolle 28 heran und erstreckt sich schräg nach oben in Richtung Lager 74. Die Wandung 86 bildet somit eine Mulde, in der die Hüllmittelrolle 32 aufgenommen werden kann und die diesen Bereich gegen Erntegut von unten schützt.

Aus dem vorstehend Beschriebenen ergibt sich eine Funktion, die nachfolgend ausgehend von Figur 2 beschrieben wird.

In Figur 2 ist die Umhüllungsvorrichtung 18 in ihrem Ladezustand gezeigt, in dem der Träger 38 nach unten geklappt ist und eine Hüllmittelrolle 32 trägt und der Andrückarm 48 so weit angehoben ist, dass diese Hüllmittelrolle 32 anschließend auf die Rolle 28 aufgesetzt werden kann. In diesem Ladezustand ist der Tragschenkel 56 um das Lager 62 nach unten in eine nahezu waagrechte Stellung geschwenkt, was bewirkt, dass:
a) der Arm 40 in Figur 2 von dem Tragschenkel 56 nach links gezogen und somit der Bolzen 80 an dem rechten Ende des Schlitzes 64 angelegt wird;
b) aufgrund der Verbindung des Mitnehmers 42, der Betätigungsvorrichtung 50 und des Arms 40 mittels des Bolzens 80 in dem Schlitz 64, der Mitnehmer 42 auf dem Lager 74 im Uhrzeigerdrehsinn schwenkt und die Betätigungsvorrichtung 50 aus einer Stellung rechts des Lagers 74 über eine Neutralstellung links des Lagers 74 gebracht wird;
c) sich der Anschlag 60 an die Unterseite des Andrückarms 48 anlegt;
d) die Betätigungsvorrichtung 50 sich ausfährt, den Mitnehmer 42 um das Lager 74 im Uhrzeigerdrehsinn schwenkt und aufgrund der Anlage des Anschlags 60 an dem Andrückarm 48, diesen ebenfalls im Uhrzeigerdrehsinn nach oben schwenkt;
e) der Anschluss-Schenkel 58 den ersten Lenker 44 in Figur 2 nach rechts drückt und damit den zweiten Lenker 46 im Uhrzeigerdrehsinn schwenkt, so dass sich das Lager 72 geringfügig hebt.

In diesem Zustand gemäß Figur 2 herrscht zwischen den beiden Lenkern 44, 46 ungefähr ein rechter Winkel, was bedeutet, dass das Lager 72 zu dem Mitnehmer 42 hin bewegt wird und sich somit die von der Betätigungsvorrichtung 50 ausgehende Ausdehnungskraft verstärkt wird.

Befindet sich die Hüllmittelrolle 32, wie in Figur 2 gezeigt, auf dem Träger 38, wird dieser um das Lager 36 hochgeschwenkt, so dass die Hüllmittelrolle 32 auf die Rolle 28 und die Rolle 54 rollt, wo sie relativ stabil liegt. Die Wandung 86 verhindert, dass die Hüllmittelrolle 32 über die Rolle 28 hinaus rollt und somit falsch positioniert wird. Während dieser anfänglichen Bewegung wird zwar der Arm 40 zu dem Lager 74 hin geschoben - er bewirkt aber keine Folgebewegung solange der Bolzen 80 in dem Schlitz 64 gleiten kann. Die aufwärts gerichtete Schwenkbewegung des Träger 38 bewirkt allerdings, dass sich der Anschluss-Schenkel 58 um das Lager 36 bewegt und dabei die beiden Lenker 44, 46 schwenkt, was bewirkt, dass sich der Winkel zwischen ihnen vergrößert, das Lager 72 sich weiter von dem Lager 74 entfernt und sich das untere Ende der Betätigungsvorrichtung 50 zu dem Lager 36 hin bewegt, wodurch sich die Neigung der Betätigungsvorrichtung 50 ändert.

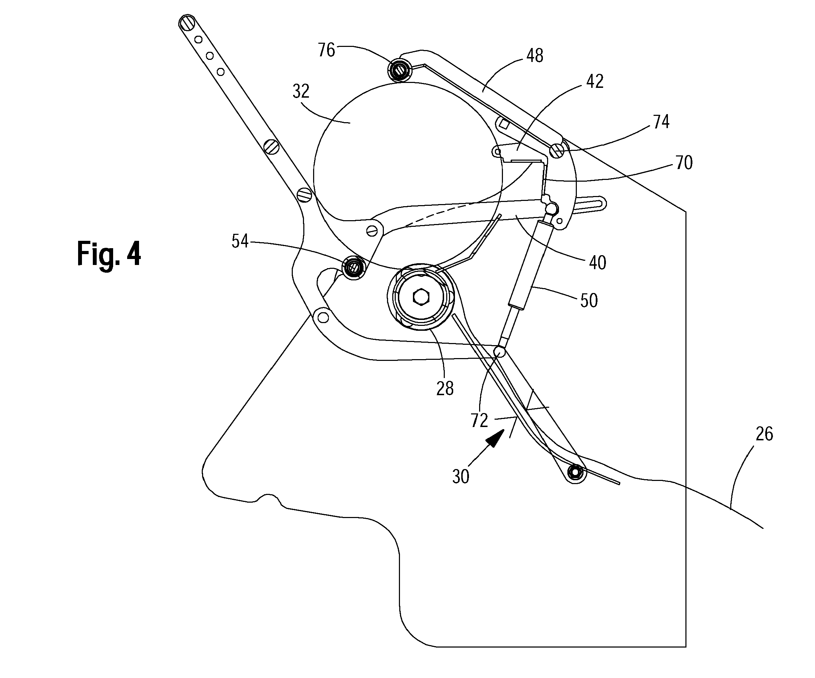

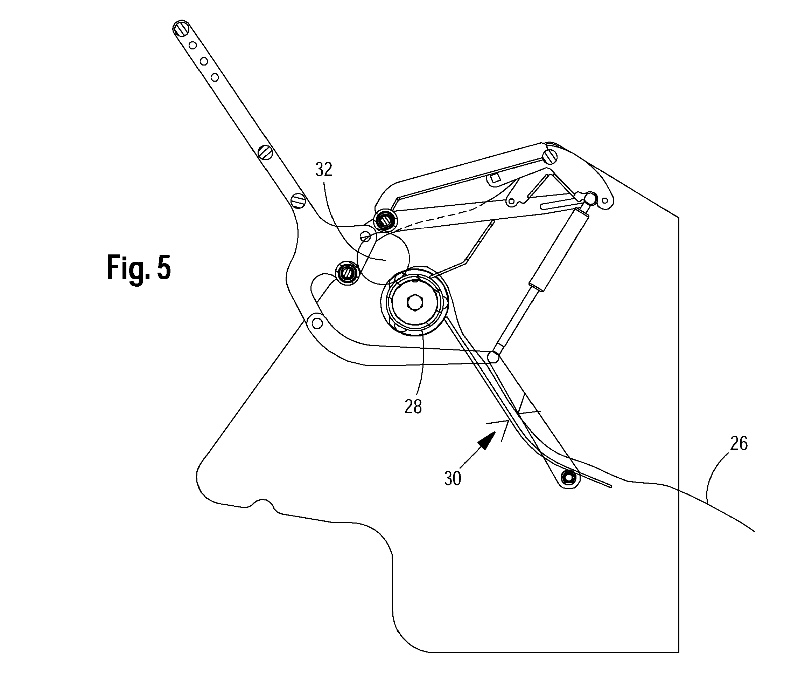

Figur 4 zeigt die Umhüllungsvorrichtung 18 in ihrer Betriebsstellung, in der Hüllmittel 26 von der Hüllmittelrolle 32 abgezogen und in die Presskammer 16 eingeführt werden kann. Aufgrund der weiter aufwärts gerichteten Bewegung des Trägers 38 wird das in Figur 4 linke Ende des Schlitzes 64 gegen den Bolzen 80 drücken, was bewirkt, dass die Betätigungsvorrichtung 50 im Uhrzeigerdrehsinn um das Lager 72 geschwenkt wird und dabei den Anschlag 70 des Mitnehmers 42 an den Winkelhebel 84 anlegt. Im weiteren Verlauf der Bewegung des Arms 40 wird somit der Andrückarm 48 entgegen dem Uhrzeigerdrehsinn um das Lager 74 nach unten schwenken und sich zu der Hüllmittelrolle 32 bewegen, bis die Rolle 76 auf dieser aufliegt. Gleichzeitig wird die Längsachse der Betätigungsvorrichtung 50 die Linie durch die Lager 72, 74, 78 überschreiten und somit den Mitnehmer 42 entgegen dem Uhrzeigerdrehsinn drängen. Die Betätigungsvorrichtung 50 stützt sich weiterhin auf dem Lager 72 ab, das sich geringfügig nach unten und in Richtung zu dem Lager 36 bewegt hat. Als Folge wird die Hüllmittelrolle 32 zwischen den Rollen 54, 28 und 76 an drei Stellen gehalten und aufgrund der Druckkraft des Andrückarms 78 mit einem bestimmten Rollwiderstand belegt, der für ein gestrafftes Hüllmittel 26 beim Umhüllen sorgt. Mit abnehmendem Durchmesser der Hüllmittelrolle 32 wird sich die Betätigungsvorrichtung 50 ausdehnen und die Rolle 76 in Anlage an der Hüllmittelrolle 32 halten, wie dies in Figur 5 gezeigt ist.

Wenn die Hüllmittelrolle 32 aufgebraucht ist oder ausgetauscht werden soll, wird der Träger 38 um das Lager 36 nach unten geschwenkt, wozu als Erleichterung eine Stange 88 vorgesehen werden kann. Diese Schwenkbewegung bewirkt, dass sich nach einem gewissen Leerweg das in der Zeichnung rechte Ende des Schlitzes 64 an den Bolzen 80 anlegt und damit die Betätigungsvorrichtung 50 über die Linie durch die Lager 72, 74 schwenkt. Sobald sich die Betätigungsvorrichtung 50 mit Blick auf die Zeichnung links von dieser Linie befindet, dehnt sie sich wieder aus und schwenkt den Mitnehmer 42 im Uhrzeigerdrehsinn um das Lager 74, so dass sich der Anschlag 60 an die Unterseite des Andrückarms 48 anlegt und diesen schließlich von der Hüllmittelrolle 32 abhebt. Schließlich tritt wieder die Situation nach Figur 2 ein.

## Patentansprüche

1. Ladevorrichtung (34) einer Umhüllungsvorrichtung (18), insbesondere einer Rundballenpresse (10), für eine Hüllmittelrolle (32) mit:
a) einem Träger (38) zur Aufnahme der Hüllmittelrolle (32), der zwischen einer Ladestellung und einer Betriebsstellung bewegbar ist,
b) einer Betätigungsvorrichtung (50), die geeignet ist, die Umhüllungsvorrichtung (18) in einen Zustand zu versetzen, in dem während eines Hüllbetriebs Hüllmittel (26) von der Hüllmittelrolle (32) abgenommen werden kann,
c) Mitteln, die die Betätigungsvorrichtung (50) abhängig von der Stellung des Trägers (38) aktivieren.

2. Ladevorrichtung nach Anspruch 1, **dadurch gekennzeichnet, dass** der Träger (38) manuell oder motorisch bewegt werden kann.

3. Ladevorrichtung nach Anspruch 1 oder 2, **dadurch gekennzeichnet, dass** die Betätigungsvorrichtung (50) als eine Feder, insbesondere als eine Gasdruckfeder, ausgebildet ist.

4. Ladevorrichtung nach einem oder mehreren der vorherigen Ansprüche, **dadurch gekennzeichnet, dass** eine Wandung (86) vorgesehen ist, die der Sicherung der Lage der Hüllmittelrolle (32) im Betriebszustand dient.

5. Ladevorrichtung nach einem oder mehreren der vorherigen Ansprüche, **dadurch gekennzeichnet, dass** der Träger (38) mittels eines Arms (40) auf einen Andrückarm (48) wirkt, der vorzugsweise über eine Rolle (76) auf die Hüllmittelrolle (32) wirkt und mittelbar oder unmittelbar von der Betätigungsvorrichtung (50) beaufschlagt wird.

6. Ladevorrichtung nach einem oder mehreren der vorherigen Ansprüche, **dadurch gekennzeichnet, dass** der Arm (40) einen Schlitz (64) enthält, in dem ein Bolzen (80) geführt ist, der der mittelbaren oder unmittelbaren Verbindung mit dem Andrückarm (48) und vorzugsweise dem Anschluss der Betätigungsvorrichtung (50) dient.

7. Ladevorrichtung nach einem oder mehreren der vorherigen Ansprüche, **dadurch gekennzeichnet, dass** die Betätigungsvorrichtung (50) über einen Mitnehmer (42) auf den Andrückarm (48) wirkt, wobei zwischen der Bewegung des Mitnehmers (42) und der des Andrückarms (48) in beiden Richtungen ein anfänglicher Leerlauf vorgesehen ist.

8. Ladevorrichtung nach einem oder mehreren der vorherigen Ansprüche, **dadurch gekennzeichnet, dass** die Betätigungsvorrichtung (50) in einem Lager (72) an einem aus mehreren Lenkern (44, 46) gebildeten Gestänge angreift und die Lage des Lagers (72) von der Stellung des Trägers (38) abhängt.

9. Ladevorrichtung nach einem oder mehreren der vorherigen Ansprüche, **dadurch gekennzeichnet, dass** der Träger (38) verriegelbar ist.
